# EUROPÄISCHE PATENTSCHRIFT

(11) **EP 1 843 926 B1**
(45) Veröffentlichungstag und Bekanntmachung des Hinweises auf die Patenterteilung: **25.07.2012**
(21) Anmeldenummer: 06707794.1
(22) Anmeldetag: 23.01.2006
(51) Int. Cl.: B60T 8/1755, B60W 10/18, B62D 6/00, B60W 10/20, B60G 17/016, B60W 10/22, B60W 30/02

(54) **VORRICHTUNG UND VERFAHREN ZUR FAHRDYNAMIKREGELUNG BEI EINEM FAHRZEUG**
DEVICE AND METHOD FOR REGULATING THE DYNAMICS OF THE MOVEMENT OF A VEHICLE
DISPOSITIF ET PROCEDE DE REGULATION DE LA DYNAMIQUE DE CONDUITE D'UN VEHICULE

(30) Priorität: 24.01.2005 DE 102005003291; 23.01.2006 DE 102006003299
(43) Veröffentlichungstag der Anmeldung: 17.10.2007
(73) Patentinhaber: Continental Teves AG & Co. oHG, 60488 Frankfurt am Main (DE)
(72) Erfinder: GIERS, Bernhard, 65812 Bad Soden (DE); SCHMIDT, Robert, 65779 Kelkheim (DE); STICHER, Thomas, 64354 Reinheim (DE); ULLRICH, Thorsten, 64579 Gernsheim (DE)
(86) Internationale Anmeldenummer: PCT/EP2006/050370
(87) Internationale Veröffentlichungsnummer: WO 2006/077255

(56) Entgegenhaltungen:
- EP-A- 1 213 163
- EP-A1- 1 388 472
- WO-A-2005/054022
- DE-A1- 4 305 155
- DE-A1- 10 053 604
- DE-A1- 10 319 177
- DE-A1- 10 328 979
- US-A1- 2002 143 451
- US-A1- 2004 158 377
- US-B1- 6 795 761

## Beschreibung

Die Erfindung betrifft eine Vorrichtung zum Beeinflussen der Fahrdynamik eines Fahrzeugs mit einem elektronischen Bremssystem umfassend einen Bremsenaktuator, mit dem ein Bremsmoment an wenigstens einer Radbremse des Fahrzeugs einstellbar ist, wobei das Bremsmoment in einer Momentenverteileinrichtung nach Maßgabe einer Giermomentanforderung ermittelbar ist, und eine erste Regeleinheit, die bei Vorliegen eines kritischen Fahrzustandes aktivierbar ist, wobei mittels der ersten Regeleinheit aufgrund einer Fahrdynamikregelung eine erste Giermomentanforderung ermittelbar ist.

Die Erfindung betrifft ferner ein Verfahren zum Beeinflussen der Fahrdynamik eines Fahrzeugs.

Beispielsweise unter der Bezeichnung ESP (Elektronisches Stabilitätsprogramm) sind Fahrdynamikregelungen für Fahrzeuge bekannt, die das Fahrzeug in kritischen Fahrsituationen durch radindividuelle Bremseingriffe stabilisieren. Die Regelsysteme sind üblicherweise in ein Bremsensteuergerät des Fahrzeugs integriert und weisen eine Regeleinheit sowie eine Momentenverteilungseinheit auf. In der Regeleinheit wird in Abhängigkeit von einer Abweichung zwischen einer Ist- und einer Sollgierrate des Fahrzeugs sowie in Abhängigkeit von dem vorliegenden Schwimmwinkel des Fahrzeugs eine Giermomentanforderung ermittelt. Die Momentenverteilungseinheit bestimmt anhand dieser Anforderung radindividuell die Bremsmomente bzw. Bremsdrücke, die mittels eines Bremsenaktuators in den Radbremsen eingestellt werden.

Ferner sind bereits Fahrdynamikregelungen zur Beeinflussung des Fahrverhaltens in unterkritischen Fahrsituationen bekannt geworden. Ziel dieser Regelungen ist es, eine Verbesserung des Fahrzeugfolgeverhaltens, d.h. eine verbesserte und direktere Reaktion des Fahrzeugs auf die Fahrbefehle des Fahrers und damit ein agileres Fahrverhalten zu erreichen.

Neben dem Bremsenaktuator können hierzu Zusatzaktuatoren zur Beeinflussung des Fahrverhaltens des Fahrzeugs angesteuert werden, wie z.B aus DE-A-100 53 604 bekannt. Hierbei kann es sich beispielsweise um eine so genannte Überlagerungslenkung handeln, mit der Lenkeingriffe an den Vorderrädern durchführbar sind, um eine Hinterachslenkung, die Lenkeingriffe an lenkbaren Hinterrädern des Fahrzeugs erlaubt, um steuerbare Fahrwerkselemente, wie beispielsweise Verstelldämpfer oder verstellbare Stabilisatoren, oder um steuerbare Elemente des Antriebsstrangs, wie beispielsweise elektronisch steuerbare Differenzialsperren handeln. Im Gegensatz zu Bremseneingriffen haben die Eingriffe derartiger Zusatzaktuatoren den Vorteil, dass sie von dem Fahrer nicht als störend wahrgenommen werden, da das Fahrzeug nicht verzögert wird.

Oftmals handelt es sich bei den Regelsystemen zur Ansteuerung der Zusatzaktuatoren um Systeme, die von dem ESP-System getrennt sind. Hierdurch ergibt sich das Problem, dass es in kritischen Fahrsituationen zu einer Überlagerung von Regeleingriffen kommen kann, die zu einer Verstärkung oder einer Reduzierung der beabsichtigten Wirkung führt.

Es ist eine Aufgabe der vorliegenden Erfindung, eine Vernetzung von Regelsystemen zur Fahrdynamikregelung in kritischen und unterkritischen Fahrsituationen zu ermöglichen und dabei insbesondere eine Überlagerung von Regeleingriffen beider Systeme zu koordinieren.

Erfindungsgemäß wird diese Aufgabe durch eine Vorrichtung mit den Merkmalen des Patentanspruchs 1 und durch ein Verfahren mit den Merkmalen des Patentanspruchs 19 gelöst.

Die Erfindung beinhaltet somit ein Regelsystem, bei dem ein elektronisches Bremssystem, das eine Regeleinheit zur Durchführung einer Fahrdynamikregelung in einem kritischen Fahrzustandsbereich enthält, sowie eine Managementeinrichtung, die eine Regeleinheit zur Durchführung einer Fahrdynamikregelung in einem unterkritischen Fahrzustandsbereich enthält, derart miteinander vernetzt sind, dass mittels der Managementeinrichtung eine Ansteuerung des Bremsenaktuators möglich ist. Der Begriff Fahrdynamikregelung ist dabei im Rahmen der Erfindung in seiner weitesten Bedeutung zu verstehen und umfasst insbesondere die Ermittlung eine Giermomentanforderung oder von Stellanforderungen zur direkten Ansteuerung von Aktuatoren in Abhängigkeit von einer Abweichung zwischen dem Istwert einem beispielsweise in einem Fahrzeugmodell berechneten Sollwert einer Fahrzustandsgröße.

Die Ansteuerung des Bremsenaktuators durch die Managementeinrichtung erfolgt vorteilhaft anhand einer Giermomentanforderung, die an die Momentenverteileinrichtung des elektronischen Bremssystems übermittelt wird, welche aus der Giermomentanforderung ein Bremsmoment ermittelt, das an einer Radbremse des Fahrzeugs eingestellt wird. Somit dient das elektronische Bremssystem der Managementeinrichtung als intelligenter Aktuator, wobei die Managementeinrichtung dabei insbesondere die in dem elektronischen Bremssystem vorhandene Funktionalität für die Momentenverteilung nutzt. Bei der erfindungsgemäßen Vernetzung der Managementeinrichtung und des elektronischen Bremssystems sind somit nur geringe Modifikationen des elektronischen Bremssystems erforderlich.

Darüber hinaus wird die Vernetzung so durchgeführt, dass bei der Aktivierung der ersten Regeleinheit ein Signal von dem elektronischen Bremssystem an die Managementeinrichtung übermittelt wird, welches zu einer Deaktivierung der zweiten Regeleinheit führt. Auf diese Weise werden die Einsatzbereiche der beiden in dem erfindungsgemäßen Regelungssystem enthaltenen Regeleinheiten voneinander getrennt und Überlagerungen von Eingriffen beider Regeleinheiten zuverlässig vermieden.

In einer vorteilhaften Ausführungsform der erfindungsgemäßen Vorrichtung ist es vorgesehen, dass die zweite Regeleinheit aktivierbar ist, wenn ein Wert wenigstens einer einen Stabilitätsgrad des Fahrzustandes repräsentierenden Fahrzustandsgröße betraglich größer als ein erster Schwellenwert ist.

Mit Vorteil ist dabei der Bereich unterkritischer Fahrzustände dadurch charakterisiert, dass der Wert wenigstens einer Fahrzustandsgröße betraglich größer als ein erster Schwellenwert ist.

Eine weitere vorteilhafte Ausführungsform der erfindungsgemä-βen Vorrichtung sieht vor, dass die erste Regeleinheit aktivierbar ist, wenn der Wert der den Stabilitätsgrad des Fahrzustandes repräsentierenden Fahrzustandsgröße betraglich größer als ein zweiter Schwellenwert ist, wobei der zweite Schwellenwert größer ist als der erste Schwellenwert.

Hierbei wird der Bereich kritischer Fahrzustände vorteilhaft dadurch charakterisiert, dass der Wert wenigstens einer Fahrzustandsgröße betraglich über einem zweiten Schwellenwert liegt, der größer ist als der erste Schwellenwert.

Aufgrund der durch die zweite Regeleinheit vorgenommenen Fahrdynamikregelung erfolgt bereits im Bereich unterkritischer Fahrzustände eine Stabilisierung des Fahrzeugs, so dass eine Fahrdynamikregelung mittels der ersten Regeleinheit erst bei "größerer Instabilität" des Fahrzeugs erforderlich wird, wenn die zweite Regeleinheit aktiv ist. Da die durch die zweite Regeleinheit gesteuerten Regeleingriffe für den Fahrer komfortabler sind, wird hierdurch der Fahrkomfort erhöht.

Bei einer vorteilhaften Weiterbildung der erfindungsgemäßen Vorrichtung und des erfindungsgemäßen Verfahrens ist es daher vorgesehen, dass eine Statusinformation, die den Aktivitätsstatus der zweiten Regeleinheit angibt, von der Managementeinrichtung an das elektronische Bremssystem übermittelbar ist, und dass der zweite Schwellenwert in Abhängigkeit von dem Aktivitätsstatus der zweiten Regeleinheit veränderbar ist.

In einer besonders zweckmäßigen Ausgestaltung der erfindungsgemäßen Vorrichtung und des erfindungsgemäßen Verfahrens ist es ferner vorgesehen, dass der zweite Schwellenwert erhöhbar ist, wenn in dem elektronischen Bremssystem anhand der Statusinformation festgestellt wird, dass die zweite Regeleinheit aktiv ist.

Eine bevorzugte Ausführungsform der erfindungsgemäßen Vorrichtung und des erfindungsgemäßen Verfahrens zeichnet sich dadurch aus, dass in der Managementeinrichtung eine Stellanforderung für die Ansteuerung wenigstens eines die Fahrdynamik des Fahrzeugs beeinflussenden Zusatzaktuators ermittelbar ist.

Zur Durchführung von Regeleingriffen können somit neben dem Bremsenaktuator, dessen Eingriffe aufgrund ihrer Verzögerungswirkung für den Fahrer unkomfortabel sind, Zusatzaktuatoren eingesetzt werden, die komfortablere Regeleingriffe erlauben, welche von dem Fahrer nicht oder kaum spürbar sind.

Eine zweckmäßige Ausgestaltung der erfindungsgemäßen Vorrichtung und des erfindungsgemäßen Verfahrens beinhaltet zudem, dass der Zusatzaktuator mittels der Managementeinrichtung nach Maßgabe der Stellanforderung steuerbar ist.

In einer vorteilhaften Ausführungsform der erfindungsgemäßen Vorrichtung und des erfindungsgemäßen Verfahrens ist es weiterhin vorgesehen, dass es sich bei dem von dem elektronischen Bremssystem an die Managementeinrichtung übermittelten Signal um ein Aktivitätssignal handelt, das eine Aktivität der ersten Regeleinheit anzeigt, und dass mittels der Managementeinrichtung aufgrund eines Empfangs des Aktivitätssignals ein neutrales Verhalten des Zusatzaktuators einstellbar ist.

In dieser Ausführungsform kann durch die erste Regeleinheit in einfacher Weise eine konventionelle ESP-Regelung durchgeführt werden, bei der eine Ansteuerung des Zusatzaktuators nicht vorgenommen wird. Anhand der in der ersten Regeleinheit ermittelten ersten Giermomentanforderung erfolgt hierbei ausschließlich eine Ansteuerung des Bremsenaktuators.

Eine zweckmäßige Ausführungsform der erfindungsgemäßen Vorrichtung und des erfindungsgemäßen Verfahrens sieht daher vor, dass die erste Giermomentanforderung an die Momentverteileinrichtung übermittelbar ist.

Eine bevorzugte Ausgestaltung der erfindungsgemäßen Vorrichtung und des erfindungsgemäßen Verfahrens zeichnet sich dadurch aus, dass es sich bei dem von dem elektronischen Bremssystem an die Managementeinrichtung übermittelten Signal um die erste Giermomentanforderung handelt, und dass aus der ersten Giermomentanforderung mittels der Managementeinrichtung eine Stellanforderung für die Ansteuerung des Zusatzaktuators und/oder eine weitere Giermomentanforderung ermittelbar ist, wobei die weitere Giermomentanforderung an die Momentenverteileinrichtung übermittelbar ist.

Diese Ausgestaltung hat den Vorteil, dass das Potenzial der Zusatzaktuatoren zur Beeinflussung der Fahrdynamik des Fahrzeugs auch im Bereich kritischer Fahrzustände genutzt werden kann. Dabei wird in der ersten Regeleinheit zudem in konventioneller Weise eine erste Giermomentanforderung ermittelt. Die Ansteuerung des Bremsenaktuators und der Zusatzaktuatorik nach Maßgabe der ersten Giermomentanforderung kann anhand von bestehenden Funktionalitäten der Managementeinrichtung vorgenommen werden, die auch zur Ansteuerung und Abstimmung dieser Aktuatoren im Bereich unterkritischer Fahrzustände verwendet wird.

Eine weitere bevorzugte Ausgestaltung der erfindungsgemäßen Vorrichtung und des erfindungsgemäßen Verfahrens ist dadurch gekennzeichnet, dass es sich bei dem von dem elektronischen Bremssystem an die Managementeinrichtung übermittelten Signal um eine zusätzlich zu der ersten Giermomentanforderung in der ersten Regeleinheit ermittelte Stellanforderung für die Ansteuerung des Zusatzaktuators handelt, wobei mittels der Managementeinrichtung eine Ansteuerung des Zusatzaktuators nach Maßgabe der Stellanforderung vornehmbar ist.

In dieser Ausführungsform wird die Stellanforderung zur Ansteuerung des Zusatzaktuators bereits in der ersten Regeleinheit ermittelt, wodurch sie besonders gut auf die Erfordernisse einer Fahrdynamikregelung im kritischen Fahrzustandsbereich abgestimmt werden kann.

Zur Ansteuerung des Bremsenaktuators ist es dabei in einer vorteilhaften Ausführungsform der erfindungsgemäßen Vorrichtung und des erfindungsgemäßen Verfahrens vorgesehen, dass die von der ersten Regeleinheit ermittelte erste Giermomentanforderung innerhalb des elektronischen Bremssystems an die Momentverteileinrichtung übermittelbar ist.

Eine zweckmäßige Ausführungsform der erfindungsgemäßen Vorrichtung und des erfindungsgemäßen Verfahrens sieht weiterhin vor, dass die von der ersten Regeleinheit ermittelte erste Giermomentanforderung über die Managementeinrichtung an die Momentverteileinrichtung übermittelbar ist.

Darüber hinaus ist eine vorteilhafte Ausführungsform der erfindungsgemäßen Vorrichtung und des erfindungsgemäßen Verfahrens dadurch gekennzeichnet, dass es sich bei dem Zusatzaktuator um ein Stellglied handelt, mit dem ein Zusatzlenkwinkel an durch den Fahrer lenkbaren Vorderrädern des Fahrzeugs einstellbar ist.

Bei einer weiteren vorteilhaften Ausführungsform der erfindungsgemäßen Vorrichtung und des erfindungsgemäßen Verfahrens ist es vorgesehen, dass es sich bei dem Zusatzaktuator um ein Stellglied handelt, mit dem ein Lenkwinkel an Hinterrädern des Fahrzeugs einstellbar ist.

Ferner ist es bei einer vorteilhaften Ausgestaltung der erfindungsgemäßen Vorrichtung und des erfindungsgemäßen Verfahrens vorgesehen, dass es sich bei dem Zusatzaktuator um ein Stellglied handelt, mit dem ein Fahrwerk des Fahrzeugs beeinflussbar ist.

Eine zweckmäßige Weiterbildung der erfindungsgemäßen Vorrichtung und des erfindungsgemäßen Verfahrens ist dadurch gekennzeichnet, dass es sich bei dem Stellglied um wenigstens einen Verstelldämpfer handelt.

Bei einer weiteren zweckmäßigen Weiterbildung der erfindungsgemäßen Vorrichtung und des erfindungsgemäßen Verfahrens ist es vorgesehen, dass es sich bei dem Stellglied um einen verstellbaren Stabilisator an einer Achse des Fahrzeugs handelt.

Weitere Vorteile, Besonderheiten und zweckmäßige Weiterbildungen der Erfindung ergeben sich aus den Unteransprüchen und der folgenden Darstellung bevorzugter Ausführungsbeispiele anhand der Figuren.

Von den Figuren zeigt
- Fig. 1a: eine schematische Darstellung des Fahrzustandsbereichs, in dem eine Fahrdynamikregelung durch ein konventionelles ESP-System vorgenommen wird,
- Fig. 1b: eine schematische Darstellung der Fahrzustandsbereiche, in denen eine Fahrdynamikregelung mittels einer mit dem ESP-System vernetzten Chassis-Managementeinrichtung und mittels des ESP-Systems erfolgt,
- Fig. 2: eine schematische Darstellung eines erfindungsgemä-βen Regelsystems sowie eine Veranschaulichung einer Fahrdynamikregelung bei Vorliegen eines unterkritischen Fahrzustandes,
- Fig. 3: eine schematische Darstellung eines erfindungsgemä-βen Regelsystems sowie eine Veranschaulichung einer Fahrdynamikregelung bei Vorliegen eines kritischen Fahrzustandes in einer ersten Ausführungsform und
- Fig. 4: eine schematische Darstellung eines erfindungsgemä-βen Regelsystems sowie eine Veranschaulichung einer Fahrdynamikregelung bei Vorliegen eines kritischen Fahrzustandes in weiteren Ausführungsformen.

Die Erfindung geht vorzugsweise von einem vierrädrigen Kraftfahrzeug mit zwei Vorder- und zwei Hinterrädern aus. Die Vorderräder können von dem Fahrer des Fahrzeugs mittels einer Lenkbetätigungseinrichtung eingelenkt werden. Das Fahrzeug verfügt ferner über einen Antriebsmotor, der ein von dem Fahrer mittels einer Betätigungseinrichtung angefordertes Antriebsmoment bereitstellt, das über einen Antriebsstrang an die Vorderräder und/oder Hinterräder übertragen wird. Darüber hinaus verfügt das Fahrzeug über eine Bremsanlage, die von dem Fahrer mittels einer Bremsenbetätigungseinrichtung betätigt werden kann. Jedem Rad des Fahrzeugs ist eine in der Bremsanlage enthaltene Radbremse zugeordnet, mit der ein Bremsmoment zum Abbremsen des Rades erzeugbar ist.

Die Bremsanlage umfasst ferner eine elektronisches Bremssystem (EBS), das in einem Bremsensteuergerät enthalten ist und einen oder mehrere Bremsenaktuatoren ansteuert, mit denen unabhängig von einer Bremsenbetätigung durch den Fahrer ein Bremsmoment an den Radbremsen erzeugbar ist, um das Fahrverhalten des Fahrzeugs zu beeinflussen. Die Bremsenaktuatoren sind dabei in einer dem Fachmann grundsätzlich bekannten Art ausgebildet.

Vorzugsweise ist die Bremsanlage als hydraulische Bremsanlage ausgeführt, bei der ein Bremsdruck, der in einem Hauptbremszylinder aufgebaut wird, über Hydraulikleitungen an die Radbremsen übertragen wird. Bei den Bremsenaktuatoren handelt es sich in dieser Ausführungsform der Erfindung vorzugsweise um elektro-magnetisch betätigbare Ventile, welche die Radbremsen trennbar mit dem Hauptbremszylinder verbinden sowie eine motorgetriebene Pumpe, mit der Druckmittel in die Radbremsen hinein und aus den Radbremsen heraus geleitet werden kann. Die Ventile und die Pumpe sind dabei Bestandteil einer durch die Bremsensteuereinheit gesteuerten Hydraulikeinheit. Alternativ kann jedoch beispielsweise auch ein aktiver Bremskraftverstärker als Bremsenaktuator eingesetzt werden, um fahrerunabhängig einen Bremsdruck in den Radbremsen aufzubauen.

Zur Durchführung einer Fahrdynamikregelung bei Vorliegen eines kritischen Fahrzustands enthält das elektronische Bremssystem (EBS) ein ESP-System, in dem Stellsignale zur Ansteuerung des Bremsenaktuators ermittelt werden, was im Folgenden noch genauer erläutert wird.

Darüber hinaus weist das Fahrzeug Zusatzaktuatoren auf, die ebenfalls zur Beeinflussung des Fahrverhaltens ansteuerbar sind. Das Fahrzeug weist dabei zumindest einen, vorzugsweise jedoch mehrere Zusatzaktuatoren auf.

Als Zusatzaktuator wird vorzugsweise eine so genannte aktive Lenkung eingesetzt, die es erlaubt, zusätzlich zu dem durch den Fahrer an den Vorderrädern eingestellten Lenkwinkel fahrerunabhängig einen Zusatzlenkwinkel einzustellen. Der Aktuator kann dabei beispielsweise als eine Überlagerungslenkung ausgebildet sein, die ein in den Lenkstrang eingesetztes Getriebe umfasst, mit dem der Zusatzlenkwinkel mittels eines Stellmotors in den Lenkstrang einsteuerbar ist. Weiterhin können Zusatzaktuatoren zur Fahrwerksbeeinflussung bzw. zur Beeinflussung des Wankverhaltens des Fahrzeugs eingesetzt werden. Derartige Aktuatoren sind dem Fachmann an sich bekannt und können beispielsweise als verstellbare Raddämpfer oder verstellbare Stabilisatoren ausgeführt sein. Ferner kann es sich bei dem Zusatzaktuator um eine Hinterachslenkung handeln, die es ermöglicht, einen Zusatzlenkwinkel an den Hinterrädern des Fahrzeugs einzustellen. Darüber hinaus können beispielsweise auch ansteuerbare Elemente innerhalb des Antriebsstrangs, wie beispielsweise steuerbare Ausgleichsgetriebe (Differenziale), als Zusatzaktuatoren zur Beeinflussung des Fahrverhaltens des Fahrzeugs eingesetzt werden.

Im Gegensatz zu den Eingriffen des Bremsenaktuators, die mit einer für den Fahrer spürbaren Verzögerung des Fahrzeugs einhergehen, erlauben die Zusatzaktuatoren die Vornahme von Eingriffen, die von dem Fahrer nicht spürbar sind. Während mittels des Bremsenaktuators vor allem in dem Fachmann bekannter Weise im Rahmen der Fahrdynamikregelung durch ein ESP-System Eingriffe zur Stabilisierung des Fahrverhaltens in kritischen Fahrsituationen vorgenommen werden, eignen sich die Zusatzaktuatoren daher auch für Eingriffe zur Beeinflussung des Fahrverhaltens in unkritischen Fahrsituationen. Durch derartige Eingriffe kann dabei insbesondere das Fahrzeugfolgeverhalten und damit die Agilität des Fahrzeugs verbessert werden. Eine Fahrdynamikregelung in unkritischen Fahrsituationen sowie die Ansteuerung der Zusatzaktuatoren wird dabei im Rahmen der vorliegenden Erfindung von einer Chassis-Managementeinrichtung (CM) vorgenommen.

Bei der vorliegenden Erfindung werden zwei Regeleinheiten zur Fahrdynamikregelung eingesetzt, bei denen es sich um die Regeleinheit eines in das elektronische Bremssystem (EBS) integrierten ESP-Systems sowie um eine in der Chassis-Managementeinrichtung (CM) enthaltene Regeleinheit handelt.

Im Rahmen der Erfindung ist es vorgesehen, dass das elektronische Bremssystem (EBS) und die Chassis-Managementeinrichtung (CM) miteinander vernetzt werden. In einer Ausführungsform der Erfindung ist die Chassis-Managementeinrichtung (CM) dabei in einem Steuergerät enthalten, welches räumlich von dem Bremsensteuergerät getrennt ist, in dem das elektronische Bremssystem (EBS) enthalten ist. Ein Datenaustausch zwischen der Chassis-Managementeinrichtung (CM) und dem elektronischen Bremssystem (EBS) bzw. zwischen den beiden Steuergeräten erfolgt in dieser Ausführungsform über einen Datenbus. Bei dem Datenbus kann es sich dabei beispielsweise um den üblicherweise in Kraftfahrzeugen eingesetzten CAN-Bus (CAN:Controller Area Network) handeln. In einer weiteren Ausführungsform der Erfindung kann es jedoch gleichfalls vorgesehen sein, dass das elektronische Bremssystem (EBS) und die Chassis-Managementeinrichtung (CM) in dem Bremsensteuergerät enthalten sind, so dass der Datenaustausch steuergerätintern erfolgen kann.

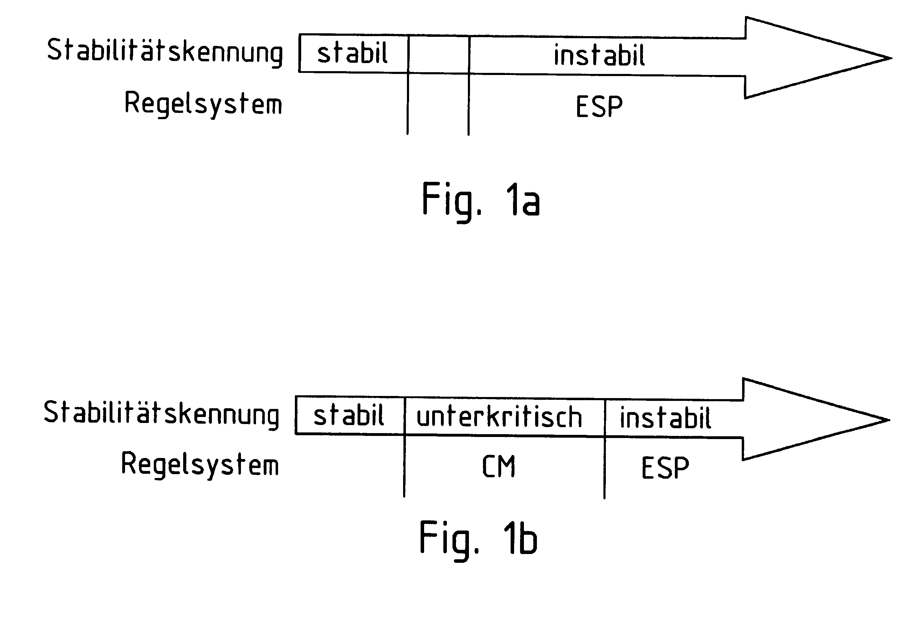

In den Figuren 1a und 1b sind schematisch die Einsatzbereiche der beiden Regeleinheiten im Vergleich zu dem Einsatzbereich eines dem Fachmann bekannten konventionellen ESP-Systems dargestellt. Für verschiedene Stabilitätskennungen wird in den Figuren dabei jeweils das für die Fahrdynamikregelung vorgesehene Regelsystem angegeben.

Wie in der Figur 1a schematisch veranschaulicht ist, erfolgt eine Beeinflussung des Fahrzustandes des Fahrzeugs mittels eines konventionellen ESP-Systems dann, wenn ein instabiler Fahrzustand vorliegt.

Die Charakterisierung des Stabilitätsgrades des Fahrzustandes erfolgt vorzugsweise anhand wenigstens einer Fahrzustandsgröße, beispielsweise anhand der Gierratenabweichung zwischen einer in einem Fahrzeugmodell berechneten Referenzgierrate und einer mittels eines Gierratensensors gemessenen Istgierrate des Fahrzeugs, dem Schwimmwinkel des Fahrzeugs und/oder der Querbeschleunigung des Fahrzeugs.

Ein instabiler Fahrzustand des Fahrzeugs liegt dabei vor, wenn die Beträge der zur Bewertung des Fahrzustands herangezogenen Fahrzustandsgrößen, die im Folgenden auch als Bewertungsgrößen bezeichnet werden, vorgegebene Schwellenwerte überschreiten. Die Schwellenwerte stellen dabei auch die Eintrittsschwellen ESP-Regelung dar, d.h. eine Fahrdynamikregelung durch das ESP-System erfolgt nur dann, wenn die Beträge der Bewertungsgrößen die Schwellenwerte überschreiten oder der Betrag wenigstens einer Bewertungsgröße den entsprechenden Schwellenwert überschreitet.

Ein stabiler Fahrzustand liegt vor, wenn die Werte der Bewertungsgrößen betraglich kleiner als weitere Schwellenwerte sind, die ihrerseits kleiner als die Eintrittsschwellenwert der ESP-Regelung sind. Stabile Fahrzustände sind dadurch gekennzeichnet, dass das Fahrzeug den Fahrervorgaben, insbesondere den Lenkvorgaben des Fahrers optimal folgt.

Zwischen dem Bereich stabiler Fahrzustände und dem Bereich instabiler Fahrzustände existiert ein Bereich, in dem das Fahrzeugfolgeverhalten nicht optimal ist, in dem der Stabilitätsgrad des Fahrzeugs aber keine den Fahrkomfort beeinträchtigende ESP-Regelung erforderlich macht. Dieser Bereich wird im Rahmen der Erfindung als unterkritischer Bereich von Fahrzuständen bezeichnet.

Wie in Figur 1b dargestellt, erfolgt in diesem Bereich von Fahrzuständen eine Fahrdynamikregelung durch die Chassis-Managementeinrichtung (CM), wobei Regeleingriffe insbesondere mittels der Zusatzaktuatoren, jedoch auch mittels des Bremsenaktuators vorgenommen werden. Als Eintrittsschwellen für die Fahrdynamikregelung durch die Chassis-Managementeinrichtung (CM) dienen dabei erste Schwellenwerte für die Bewertungsgrö-βen, die kleiner sind als zweite, für den Eintritt in die ESP-Regelung maßgebliche Schwellenwerte.

Da die Regeleingriffe, die im Bereich unterkritischer Fahrzustände durch die Chassis-Managementeinrichtung (CM) vorgenommen werden, neben der Verbesserung des Fahrzeugfolgeverhaltens gleichfalls eine Stabilisierung des Fahrzustandes des Fahrzeugs bewirken, kann der Fahrzustandsbereich, in dem eine ESP-Regelung durchgeführt wird, hin zu "größerer Instabilität" verschoben werden. Im Rahmen der Erfindung sind daher größere Eintrittsschwellen für die ESP-Regelung vorgesehen als bei dem konventionellen ESP-System, wenn die in der Chassis-Managementeinrichtung (CM) enthaltene Regeleinheit aktiv ist.

Im Rahmen der Erfindung ist es somit vorgesehen, dass erste Schwellenwerte für die Bewertungsgrößen vorgegeben werden, bei deren Überschreiten der Fahrzustand als ein unterkritischer Fahrzustand klassifiziert wird. Die ersten Schwellenwerte dienen dabei als Eintrittsschwellen für die Fahrdynamikregelung durch die Chassis-Managementeinrichtung (CM) dienen. Ferner sind zweite Schwellenwerte vorgegeben, welche größer als die ersten Schwellenwerte sind und bei deren Überschreiten der Fahrzustand als kritischer Fahrzustand klassifiziert wird. Die zweiten Schwellenwerte dienen als Eintrittsschwellen für die Fahrdynamikregelung durch das ESP-System.

Vorzugsweise ist es ferner vorgesehen, dass die Einsatzbereiche der beiden vorgesehenen Regeleinheiten voneinander getrennt sind. Dabei erfolgt eine Fahrdynamikregelung durch die Chassis-Managementeinrichtung (CM) nur dann, wenn die Werte einer Bewertungsgröße oder mehrerer Bewertungsgrößen betraglich zwischen dem ersten und dem zweiten Schwellenwert liegen. Eine Fahrdynamikregelung durch das ESP-System wird nur dann vorgenommen, wenn die Werte einer oder mehrere Bewertungsgrößen betraglich größer sind als die zweiten Schwellenwerte. Durch die Trennung der Einsatzbereiche der beiden Regeleinheiten wird eine Überlagerung von Regeleingriffen des ESP-Systems und der Chassis-Managementeinrichtung (CM) vermieden, die das Fahrzeugverhalten möglicherweise in ungünstiger Weise beeinflusst.

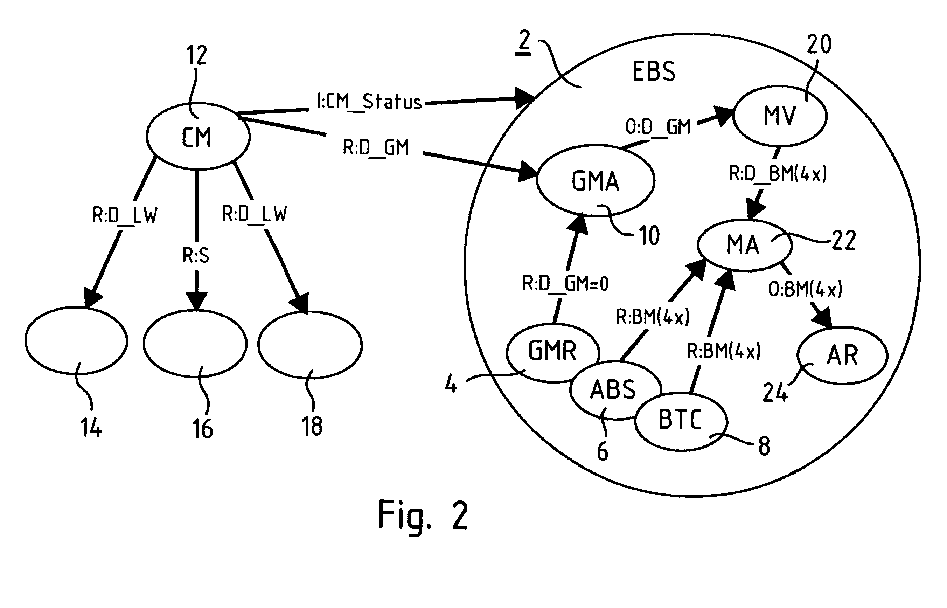

Die Durchführung der Fahrdynamikregelung mittels des erfindungsgemäßen Regelungssystems im Bereich unterkritischer Fahrzustände ist schematisch in Figur 2 veranschaulicht.

In Figur 2 ist dabei insbesondere das elektronische Bremssystem (EBS) 2 dargestellt, welches beispielsweise das Bremsensteuergerät des Fahrzeugs integriert ist eine oder mehrere Regeleinheiten 4, 6, 8, umfasst, die beispielsweise als Softwaremodule ausgeführt sein können. Zumindest enthält das elektronische Bremssystem (EBS) 2 dabei die Regeleinheit (GMR: Giermomentenregelung) 4, die Bestandteil des ESP-Systems ist, und für die Fahrdynamikregelung im Bereich kritischer Fahrzustände eingesetzt wird.

Zur Durchführung der Fahrdynamikregelung wird dabei eine Gierratenabweichung zwischen einer in einem Fahrzeugreferenzmodell anhand von Fahrervorgaben, wie beispielsweise der Fahrzeuggeschwindigkeit und dem durch den Fahrer an den Vorderrädern des Fahrzeugs eingestellten Lenkwinkel, ermittelten Referenzgierrate und einer mittels eines Gierratensensors erfassten Sollgierrate ermittelt. Ferner wird ein Schätzwert für den vorliegenden Schwimmwinkel des Fahrzeugs ermittelt.

In Abhängigkeit von der Gierratenabweichung und dem vorliegenden Schwimmwinkel bzw. einer Differenz zwischen dem vorliegenden Schwimmwinkel und einem Referenzwert und gegebenenfalls weiterer Fahrzustandsgrößen, wie beispielsweise der Querbeschleunigung des Fahrzeugs, ermittelt die Regeleinheit (GMR) 4 im aktiven Zustand eine Zusatzgiermomentanforderung (R:D_GM), deren Wert einem das Fahrzeug stabilisierenden Zusatzgiermoment entspricht. Liegt kein kritischer Fahrzustand vor, so ist die Regeleinheit (GMR) 4 inaktiv. Im inaktiven Zustand wird bei keine Zusatzgiermomentanforderung (R:D_GM) oder eine Zusatzgiermomentanforderung mit dem Wert Null (R:D_GM=0) in der Regeleinheit (GMR) 4 ermittelt.

Die Regeleinheit (GMR) 4 ist signalmäßig mit einer Giermomentenarbitrierungseinrichtung (GMA) 10 verbunden. Die Giermomentenarbitrierungseinrichtung (GMA) 10 stellt dabei eine Schnittstelle zwischen dem elektronischen Bremssystem (EBS) 2 und der Chassis-Managementeinrichtung (CM) 12 dar, die eine Ansteuerung des Bremsenaktuators durch die Chassis-Managementeinrichtung (CM) 12 ermöglicht.

Das Chassis-Managementsystem (CM) 12 enthält eine weitere, in Figur 2 nicht dargestellte Regeleinheit in der beispielsweise ebenfalls in Abhängigkeit von der Gierratenabweichung und/oder weiterer Fahrzustandsgrößen ein Zusatzgiermoment ermittelt wird. Die Regeleinheit stellt dabei eine Verteilfunktion zur Verfügung, welche aus dem Zusatzgiermoment eine Zusatzgiermomentanforderung (R:D_GM) zur Ansteuerung der Fahrzeugbremsen sowie weitere Stellanforderungen zur Ansteuerung der Zusatzaktuatoren 14, 16, 18 ermittelt. Bei den weiteren Stellanforderungen handelt es sich bei der in Figur 2 dargestellten Ausführungsform der Erfindung um eine Zusatzlenkwinkelanforderung (R:D_LW) zur Ansteuerung der aktiven Lenkung 14, um eine Stellanforderung (R:S) zur Ansteuerung der auf das Fahrwerk einwirkenden Zusatzaktuatoren 16, bei der es sich beispielsweise um mittels eines steuerbaren Stabilisators einstellbare Radlastdifferenzen an einer Fahrzeugachse handelt, sowie um eine weitere Zusatzlenkwinkelanforderung (R:D_LW) zur Ansteuerung der Hinterachslenkung 18.

Die von der Regeleinheit der Chassis-Managementeinrichtung (CM) ermittelte Zusatzgiermomentanforderung (R:D_GM) wird an die Giermomentenarbitrierungseinrichtung (GMA) 10 des elektronischen Bremssystems (EBS) 2 übermittelt und dort an eine Momentenverteileinrichtung (MV) 20 weitergleitet. Die Momentenverteileinrichtung (MV) 20 ist üblicherweise auch Bestandteil eines dem Fachmann bekannten konventionellen ESP-Systems und hat die Aufgabe, das in der Regeleinheit (GMR) 4 ermittelte Zusatzgiermoment in Zusatzbremsmomentanforderungen (R:D_BM) für die vier Radbremsen des Fahrzeugs umzuwandeln.

Im Rahmen der Erfindung wird die Funktionalität der Momentenverteileinrichtung (MV) 20 nicht gegenüber der konventionellen Ausführung des elektronischen Bremssystems (EBS) 2 verändert. Zum konventionellen ESP-System besteht lediglich der Unterschied, dass der Momentenverteileinrichtung (MV) 20 Zusatzgiermomentsollwerte (O:D_GM) von der Giermomentenarbitrierungseinrichtung (GMA) 10 zugeführt werden.

Diese ermittelt die Zusatzgiermomentsollwerte (O:D_GM) anhand der Zusatzgiermomentanforderungen (R:D_GM) der Regeleinheit (GMR) 4 und der Chassis-Managementeinrichtung (CM) 12.

Die in der Momentenverteileinrichtung (MV) 20 ermittelten Zusatzbremsmomentanforderungen (R:D_BM) werden an eine Momentenarbitrierungseinrichtung (MA) 22 übermittelt, der darüber hinaus Bremsmomentanforderungen (R:BM) für die vier Radbremsen von weiteren in dem elektronischen Bremssystem (EBS) 2 enthaltenen Regeleinheiten 6, 8 zugeführt werden.

Die Regeleinheit (ABS: Antiblockiersystem) 6 dient dabei zur Durchführung einer Bremsschlupfregelung, bei der ein Blockieren der Fahrzeugräder während eines Bremsvorgangs durch eine Reduzierung des Bremsmoments an Rädern mit einem hohen Schlupf verhindert wird. Die Regeleinheit (BTC: Brake Traction Control) 8 führt eine Bremsenregelung durch, die dem Fachmann auch unter der Bezeichnung Antriebsschlupfregelung (ASR) bekannt ist, und das Durchdrehen der Antriebsräder des Fahrzeugs bei Beschleunigungsvorgängen verhindert.

Innerhalb der Momentenarbitrierungseinrichtung (MA) 22 erfolgt ein Arbitrierung der Bremsmomentanforderungen (R:BM) der Regeleinheiten 6 und 8 und der in der Momentenverteilungseinrichtung (MV) 20 ermittelten Zusatzbremsmomentanforderungen (R:D_BM). Im Rahmen der Arbitrierung werden dabei Sollbremsmomente (O:BM) für die vier Radbremsen des Fahrzeugs ermittelt, die mittels des Bremsenaktuators in den Radbremsen eingestellt werden. Hierzu werden die Sollbremsmomente (O:BM) von der Momentenarbitrierungseinrichtung (MA) 22 an eine Aktuatorregelungseinheit (AR) 24 übermittelt, welche Stellbefehle zur Ansteuerung des Bremsenaktuators nach Maßgabe der Sollbremsmomente (O:BM) erzeugt.

Die dargestellte Struktur des Fahrdynamikregelsystems erlaubt eine einfache Vernetzung der Chassis-Managementeinrichtung (CM) 12 und des elektronischen Bremssystems (EBS) 2 bzw. des ESP-Systems, bei der die Funktionalität des elektronischen Bremssystems (EBS) 2 durch die Chassis-Managementeinrichtung (CM) 12 genutzt werden können, ohne dass diese dabei auf die internen Schnittstellen des elektronischen Bremsensystems (EBS) 2 zugreifen muss. Vorteilhaft wird mit der Giermomentenarbitrierungseinrichtung (GMA) 10 eine Schnittstelle geschaffen, die es der Chassis-Managementeinrichtung (CM) 12 gestattet, das Bremsenssteuergerät als intelligenten Aktuator zu nutzen.

Wie bereits erwähnt, ist es im Rahmen der Erfindung vorgesehen, dass die Eintrittsschwellen der Bewertungsgrößen, die für den Eintritt in die Fahrdynamikregelung durch das ESP-System maßgeblich sind, angepasst werden. Dies erfolgt dabei in Abhängigkeit von der Statusinformation (I:CM_Status), die von der Managementeinrichtung (CM) 12 an das elektronische Bremssystem (EBS) 2 übermittelt wird. Die Statusinformation enthält eine Information über den Aktivitätsstatus der Chassis-Managementeinrichtung (CM) 12, die angibt, ob die in der Chassis-Managementeinrichtung (CM) 12 enthaltene Regeleinheit aktiv ist. Ist dies der Fall, wird der Einsatzbereich des ESP-Systems dabei hin zu "größerer Instabilität" verschoben. Hierzu werden die Beträge der Schwellenwerte, die für einen Eintritt in die ESP-Regelung maßgeblich sind, erhöht, wenn anhand des Statussignals (I:CM_Status) festgestellt wird, dass die in der Chassis-Managementeinrichtung (CM) 12 enthaltene Regeleinheit aktiv ist.

Eine Deaktivierung dieser Regeleinheit erfolgt im Bereich kritischer Fahrzustände, der anhand der entsprechenden Schwellenwerte der Bewertungsgrößen charakterisiert ist. In diesem Bereich wird die Regeleinheit (GMR) 4 des ESP-Systems aktiviert und nimmt die Fahrdynamikregelung vor.

Insbesondere beim Übergang zwischen dem Bereich unterkritischer Fahrzustände und dem Bereich kritischer Fahrzustände kann es dabei dazu kommen, dass sowohl die in der Chassis-Managementeinrichtung (CM) 12 enthaltene Regeleinheit als auch die Regeleinheit (GMR) 4 des ESP-Systems, die ebenfalls mit der Giermomentenarbitrierungseinrichtung (GMA) 10 verbunden ist, aktiviert sind. In diesem Fall werden in der Giermomentenarbitrierungseinrichtung (GMA) 10 konkurrierende Zusatzgiermomentanforderungen (R:D_GM) empfangen und es wird eine Arbitrierung vorgenommen. Um eine Überlagerung von Bremseneingriffen beider Systeme zu vermeiden, ist es dabei vorgesehen, dass eine der Zusatzgiermomentanforderungen (R:D_GM) im Rahmen einer Priorisierung an die Momentenverteileinrichtung (MV) 20 weitergeleitet wird, während die zweite Zusatzgiermomentanforderung (R:D_GM) blockiert wird. Vorzugsweise ist dabei vorgesehen, dass eine Weiterleitung der von der Chassis-Managementeinrichtung empfangenen Zusatzgiermomentanforderung (R:D_GM) erfolgt, da diese auf die mittels der Zusatzaktuatoren 14, 16, 18 vorgenommenen Eingriffe abgestimmt ist, die ebenfalls vorgenommen werden, wenn die in der Chassis-Managementeinrichtung (CM) 12 enthaltene Regeleinheit aktiv ist.

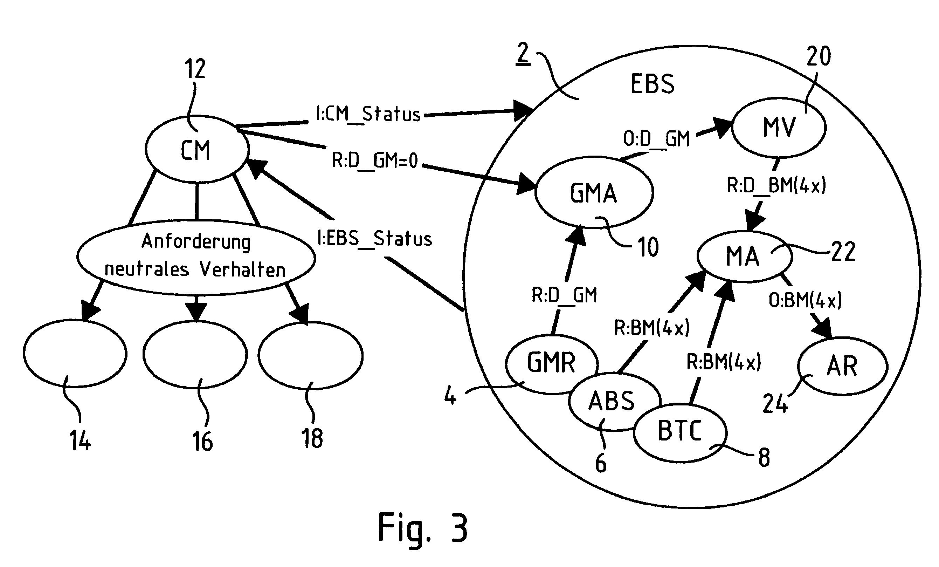

Die Fahrdynamikregelung im Bereich kritischer Fahrzustände kann bei dem erfindungsgemäßen Regelsystem anhand verschiedener Ausführungsformen vorgenommen werden. Eine erste Ausführungsform ist in Figur 3 dargestellt. Bei dieser Ausführungsform ist es vorgesehen, dass Zusatzaktuatoren bei Vorliegen eines kritischen Fahrzustandes nicht aktiv sind bzw. ein neutrales Verhalten der Zusatzaktuatoren angefordert wird. Hierzu ist es vorgesehen, dass von dem elektronischen Bremssystem (EBS) 2 eine Statusinformation (I:EBS_Status) an die Chassis-Managementeinrichtung (CM) 12 übermittelt wird, die eine Angabe darüber enthält, ob die Regeleinheit (GMR) 4 des ESP-Systems aktiviert ist. Die Chassis-Managementeinrichtung (CM) 12 ist dabei so programmiert, dass sie die enthaltene Regeleinheit deaktiviert, dass ein neutrales Verhalten der Zusatzaktuatoren 14, 16, 18 angefordert wird und dass keine Zusatzgiermomentanforderung (R:D_GM) bzw. eine Zusatzgiermomentanforderung mit dem Wert Null (R:D_GM=O) an das elektronische Bremssystem (EBS) 2 übermittelt wird, wenn festgestellt wird, dass die Regeleinheit (GMR) 4 des ESP-Systems aktiv ist.

Eine von Null verschiedene Zusatzgiermomentanforderung (R:D_GM) wird im Bereich kritischer Fahrzustände in der Regeleinheit (GMR) 4 des ESP-Systems ermittelt und bei der in Figur 3 dargestellten Ausführungsform der Erfindung an die Giermomentenarbitrierungseinrichtung (GMA) 10 übermittelt. Diese leitet die Zusatzgiermomentanforderung (R:D_GM) als Zusatzgiermomentsollwert (O:D_GM) an die Momentenverteileinrichtung (MV) 20 weiter, welche nach Maßgabe des Zusatzgiermomentsollwertes (O:D_GM) in der zuvor beschriebenen Weise Zusatzbremsmomentanforderungen (R:D_BM) berechnet und an die Momentarbitrierungseinrichtung (MA) 22 sendet. Anhand einer Arbitrierung der Zusatzbremsmomentanforderungen (R:D_BM) und der Bremsmomentanforderungen (R:BM) der Regeleinheiten 6 und 8 bestimmt diese die Bremsmomentensollwerte (O:BM) die mittels der Bremsenaktuatorregeleinrichtung (AR) 24 in den Radbremsen eingestellt werden.

Der Vorteil dieser Ausführungsform der Erfindung besteht in einer sehr einfachen Fahrdynamikregelung durch das ESP-System, welches die Zusatzaktuatoren 14, 16, 18 nicht berücksichtigen muss. Damit wird allerdings auch das Potenzial der Zusatzaktuatoren zur Beeinflussung des Fahrverhaltens des Fahrzeugs nicht genutzt. Zudem kann sich der Übergang der Zusatzaktuatoren 14, 16, 18 in den neutralen Zustand während einer laufenden Regelung ungünstig auf das Fahrverhalten des Fahrzeugs auswirken.

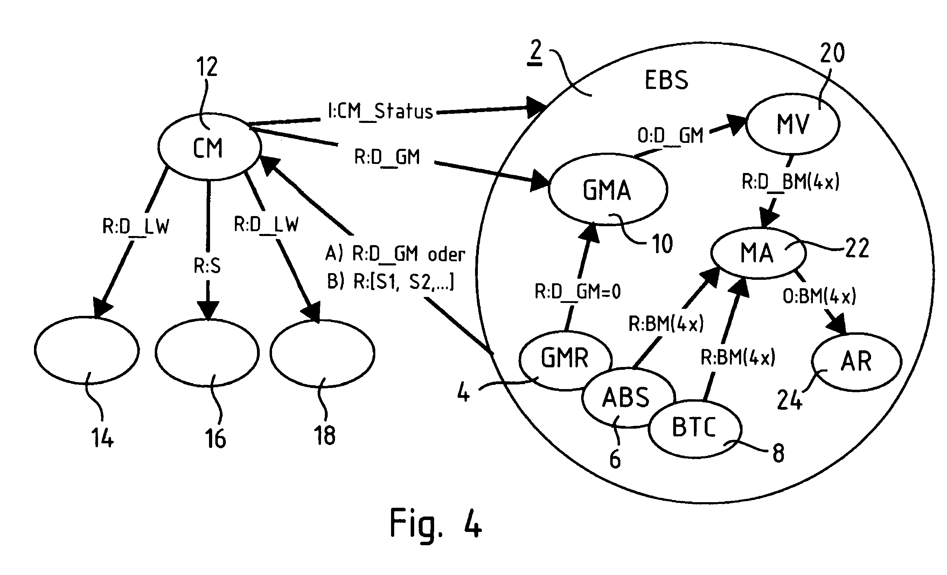

In bevorzugten Ausführungsformen der Erfindung, die im Folgenden anhand der Figur 4 erläutert werden, ist es daher vorgesehen, dass die Zusatzaktuatoren 14, 16, 18 auch zur Stabilisierung eines kritischen Fahrzustandes genutzt werden. Die Stellanforderungen werden dabei aus Signalen ermittelt, die von der bei Vorliegen einer kritischen Fahrsituation aktiven Regeleinheit (GMR) 4 des ESP-System an die Chassis-Managementeinrichtung (CM) 12 übermittelt werden. Aufgrund des Empfangs derartiger Signale erhält die Chassis-Managementeinrichtung (CM) insbesondere auch eine Information darüber, dass die Regeleinheit (GMR) 4 des ESP-Systems aktiv ist. Dabei ist es vorgesehen, dass die in der Chassis-Managementeinrichtung (CM) 12 enthaltene Regeleinheit aufgrund des Empfangs derartiger eine Aktivität der Regeleinheit (GMR) 4 anzeigenden Signale deaktiviert wird.

Bei Vorliegen eines kritischen Fahrzustands wird die Auftragsrichtung, bei den in Figur 4 dargestellten Ausführungsformen der Erfindung umgekehrt. D.h. in einer Umkehrung der Richtung, in der Stellanforderungen bzw. Zusatzgiermomentanforderungen (R:D_GM) bei Vorliegen einer unterkritischen Fahrsituation zwischen der Chassis-Managementeinrichtung (CM) 12 und dem elektronischen Bremssystem (EBS) 2 ausgetauscht werden, werden hier Stellanforderungen bzw. eine Zusatzgiermomentanforderung (R:D_GM) von dem elektronischen Bremssystem (EBS) 2 an die Chassis-Managementeinrichtung übermittelt. Wie in Figur 4 dargestellt, können dabei insbesondere zwei Ausprägungen der Erfindung vorgesehen sein.

In einer ersten Ausprägung (Variante A) wird bei Vorliegen eines kritischen Fahrzustandes eine Zusatzgiermomentanforderung (R:D_GM) in der Regeleinheit (GMR) 4 des ESP-Systems ermittelt, welche dann an die Chassis-Managementeinrichtung (CM) 12 gesendet wird.

Aufgrund des Empfangs der Zusatzgiermomentanforderung (R:D_GM) in der Chassis-Managementeinrichtung (CM) 12 wird die in der Chassis-Managementeinrichtung (CM) 12 enthaltene Regeleinheit deaktiviert. Ferner interpretiert die Chassis-Managementeinrichtung (CM) 12 die Zusatzgiermomentanforderung (R:D_GM) und setzt sie mittels der Zusatzaktuatoren 14, 16, 18 sowie mittels des Bremsenaktuators um.

Dazu werden in Abhängigkeit von der Zusatzgiermomentanforderung (R:D_GM) die Stellanforderungen (R:D_LW, R:S) zur Ansteuerung der Zusatzaktuatoren 14, 16, 18 sowie eine weitere Zusatzgiermomentanforderung (R:D_GM) zur Ansteuerung des Bremsenaktuators bestimmt. Zur Ermittlung der Stellanforderungen (R:D_LW, R:S) und der weiteren Zusatzgiermomentanforderung (R:D_GM) kann dabei die Verteilfunktionalität der Chassis-Managementeinrichtung (CM) 12 genutzt werden, mit deren Hilfe die Stellanforderungen (R:D_LW, R:S) zur Ansteuerung der Zusatzaktuatoren 14, 16, 18 sowie die Zusatzgiermomentanforderung (R:D_GM) zur Ansteuerung der Fahrzeugbremse auch im Bereich unterkritischer Fahrzustände aus einem Zusatzgiermoment ermittelt werden.

Die weitere Zusatzgiermomentanforderung (R:D_GM) wird von der Chassis-Managementeinrichtung (CM) 12 an die Giermomentenarbitrierungseinrichtung (GMA) 10 des elektronischen Bremssystems (EBS) 2 übermittelt und in der gleichen Weise in eine an den Radbremsen einzustellende Zusatzbremsmomentanforderung (R:D_BM) umgewandelt, wie dies auch mit der Zusatzgiermomentanforderung (R:D_GM) erfolgt, die bei Vorliegen eines unterkritischen Fahrzustandes von der Chassis-Managementeinrichtung (CM) 12 an das elektronische Bremssystem (EBS) 2 gesendet wird.

In einer zweiten in Figur 4 dargestellten Ausprägung (Variante B) werden die Stellanforderung zur Ansteuerung einiger oder aller Zusatzaktuatoren 14, 16, 18 bereits in der Regeleinheit (GMR) 4 des ESP-Systems erzeugt. Dann wird ein Vektor von Stellanforderungen (R: [S1, S2,...]) von der Regeleinheit (GMR) 4 an die Chassis-Managementeinrichtung (CM) 12 übermittelt und die Stellanforderungen werden von der Chassis-Managementeinrichtung (CM) 12 an die Zusatzaktuatoren 14, 16, 18 bzw. die Steuerungseinrichtungen der Zusatzaktuatoren weitergeleitet, so dass diese entsprechend den Stellanforderungen angesteuert werden. Ferner erfolgt auch bei dieser Ausführungsform der Erfindung ein Deaktivierung der in der Chassis-Managementeinrichtung (CM) 12 enthaltenen Regeleinheit, wenn die Stellanforderungen (R:[S1, S2,...]) in der Chassis-Managementeinrichtung (CM) 12 empfangen werden.

Darüber hinaus wird in der Regeleinheit (GMR) 4 des ESP-Systems eine Zusatzgiermomentanforderung (R:D_GM) ermittelt, die zur Ansteuerung des Bremsensaktuators dient. Diese wird in einer Ausführungsform der Erfindung, wie in Figur 4 dargestellt, ebenfalls an die Chassis-Managementeinrichtung (CM) 12 übermittelt und von dieser an die Giermomentenarbitrierungseinrichtung (GMA) 10 weitergeleitet. In einer weiteren Ausführungsform, die in Figur 4 nicht dargestellt ist, wird die Zusatzgiermomentanforderung (R:D_GM) innerhalb des elektronischen Bremssystems (EBS) von der Regeleinheit (GMR) 4 an die Giermomentenarbitrierungseinrichtung (GMA) 10 übermittelt.

In beiden zuvor dargestellten Ausführungsformen wird die Zusatzgiermomentanforderung (R:D_BM) von der Giermomentenarbitrierungseinrichtung (GMA) 10 als Zusatzgiermomentsollwert (O:D_GM) an die Momentverteileinrichtung (MV) 20 gesendet. Dort wird sie, wie bereits beschrieben in Zusatzbremsmomentanforderungen (R:D_BM) umgerechnet, welche an die Momentenarbitrierungseinrichtung (MA) 22 übermittelt wird. Aus der Zusatzbremsmomentenanforderung (R:D_BM) sowie den Bremsmomentanforderungen (R:BM) der Regeleinheiten 6 und 8 ermittelt diese anhand einer Arbitrierung Sollbremsmomente (O:BM), die mittels der Bremsenaktuatorregelungseinrichtung (AR) 24 in den Radbremsen des Fahrzeugs eingestellt werden.

Im Rahmen der Erfindung wird somit ein Fahrdynamikregelsystem beschrieben, bei dem die Chassis-Managementeinrichtung (CM) 12, die insbesondere eine Ansteuerung der Zusatzaktuatoren 14, 16, 18 vornimmt und eine Regeleinheit zur Fahrdynamikregelung in einem Bereich unterkritischer Fahrzustände vornimmt, mit einem elektronischen Bremssystem (EBS) 2 bzw. einem ESP-System in vorteilhafter Weise miteinander vernetzt sind.

Die dargestellte Art und Weise der Vernetzung ermöglicht es dabei auch, wesentlichen Komponenten eines konventionellen ESP-System beizubehalten, so dass die Vernetzung nur geringe Modifikationen des elektronischen Bremssystems (EBS) 2 erfordert. Dadurch ist es bei der dargestellten Vernetzung auch möglich, das ESP-System bei einem Ausfall der Chassis-Managementeinrichtung (CM) 12 autonom weiterzubetreiben, so dass eine Fahrdynamikregelung im Bereich kritischer Fahrzustände auch bei einem Ausfalls des Chassis-Managementeinrichtung (CM) 12 durchgeführt werden kann.

## Patentansprüche

1. Vorrichtung zum Beeinflussen der Fahrdynamik eines Fahrzeugs mit einem elektronischen Bremssystem (2) umfassend einen Bremsaktuator, mit dem ein Bremsmoment an wenigstens einer Radbremse des Fahrzeugs einstellbar ist, wobei das Bremsmoment in einer Momentenverteileinrichtung (20) nach Maßgabe einer Giermomentanforderung ermittelbar ist, und eine erste Regeleinheit (4), die bei Vorliegen eines kritischen Fahrzustandes aktivierbar ist, wobei mittels der ersten Regeleinheit (4) aufgrund einer Fahrdynamikregelung eine erste Giermomentanforderung ermittelbar ist, und eine Managementeinrichtung (12), die eine zweite Regeleinheit enthält, die bei Vorliegen eines unterkritischen Fahrzustandes aktivierbar ist, wobei mittels der zweiten Regeleinheit aufgrund einer Fahrdynamikregelung eine zweite Giermomentanforderung (R:D_GM) ermittelbar ist und dass in einem aktivierten Zustand der ersten Regeleinheit (4) ein Signal (I:EBS_Status; R:D_GM; R:[S1, S2,...]) von dem elektronischen Bremssystem (2) an die Managementeinrichtung (12) übermittelbar ist, das zu einer Deaktivierung der zweiten Regeleinheit führt. **dadurch gekenntzeichnet,** dass die erste Regeleinheit (4) signalmäßig mit einer Giermomentenarbitrierungseinrichtung (10) verbunden ist, die eine Schnittstelle zwischen dem elektronischen Bremssystem (2) und der Managementeinrichtung (12) darstellt, und die eine Ansteuerung des Bremsenaktuators durch die Managementeinrichtung (12) ermöglicht, so dass die zweite Giermomentanforderung (R:D_GM) an die Momentverteileinrichtung (20) übermittelbar ist.

2. Vorrichtung nach Anspruch 1,
**dadurch gekennzeichnet,**
**dass** die zweite Regeleinheit aktivierbar ist, wenn ein Wert wenigstens einer einen Stabilitätsgrad des Fahrzustandes repräsentierenden Fahrzustandsgröße betraglich größer als ein erster Schwellenwert ist.

3. Vorrichtung nach Anspruch 1 oder 2,
**dadurch gekennzeichnet,**
**dass** die erste Regeleinheit (4) aktivierbar ist, wenn der Wert der den Stabilitätsgrad des Fahrzustandes repräsentierenden Fahrzustandsgröße betraglich größer als ein zweiter Schwellenwert ist, wobei der zweite Schwellenwert größer ist, als der erste Schwellenwert.

4. Vorrichtung nach einem der vorangegangenen Ansprüche,
**dadurch gekenntzeichnet,**
dass eine Statusinformation (I:CM_Status), die den Aktivitätsstatus der zweiten Regeleinheit angibt, von der Managementeinrichtung (12) an das elektronische Bremssystem (2) übermittelbar ist, und dass der zweite Schwellenwert in Abhängigkeit von dem Aktivitätsstatus der zweiten Regeleinheit veränderbar ist.

5. Vorrichtung nach Anspruch 4,
**dadurch gekennzeichnet,**
**dass** der zweite Schwellenwert erhöhbar ist, wenn in dem elektronischen Bremssystem (2) anhand der Statusinformation (I:CM_Status) festgestellt wird, dass die zweite Regeleinheit aktiv ist.

6. Vorrichtung nach einem der vorangegangenen Ansprüche,
**dadurch gekennzeichnet,**
**dass** in der Managementeinrichtung (12) eine Stellanforderung (R: D_LW; R:S) für die Ansteuerung wenigstens eines die Fahrdynamik des Fahrzeugs beeinflussenden Zusatzaktuators (14; 16; 18) ermittelbar ist.

7. Vorrichtung nach Anspruch 6,
**dadurch gekennzeichnet,**
**dass** der Zusatzaktuator (14; 16; 18) mittels der Managementeinrichtung (12) nach Maßgabe der Stellanforderung steuerbar ist.

8. Vorrichtung nach einem der vorangegangenen Ansprüche,
**dadurch gekennzeichnet,**
**dass** es sich bei dem von dem elektronischen Bremssystem (2) an die Managementeinrichtung (12) übermittelten Signal um ein Aktivitätssignal (I:EBS_Status) handelt, das eine Aktivität der ersten Regeleinheit (4) anzeigt, und dass mittels der Managementeinrichtung (12) aufgrund eines Empfangs des Aktivitätssignals (I:EBS_Status) ein neutrales Verhalten des Zusatzaktuators (14; 16, 18) einstellbar ist.

9. Vorrichtung nach einem der vorangegangenen Ansprüche,
**dadurch gekennzeichnet,**
**dass** die erste Giermomentanforderung (R:D_GM) an die Momentverteileinrichtung (20) übermittelbar ist.

10. Vorrichtung nach einem der vorangegangenen Ansprüche,
**dadurch gekennzeichnet,**
**dass** es sich bei dem von dem elektronischen Bremssystem (2) an die Managementeinrichtung (12) übermittelten Signal um die erste Giermomentanforderung (R:D GM) handelt, und dass aus der ersten Giermomentanforderung (R:D_GM) mittels der Managementeinrichtung (12) eine Stellanforderung (R:D_LW; R:S) für die Ansteuerung des Zusatzaktuators (14; 16; 18) und/oder eine weitere Giermomentanforderung (R:D_GM) ermittelbar ist, wobei die weitere Giermomentanforderung (R:D_GM) an die Momentenverteileinrichtung (20) übermittelbar ist.

11. Vorrichtung nach einem der vorangegangenen Ansprüche,
**dadurch gekennzeichnet,**
**dass** es sich bei dem von dem elektronischen Bremssystem (2) an die Managementeinrichtung (12) übermittelten Signal um eine zusätzlich zu der ersten Giermomentanforderung (R:D_GM) in der ersten Regeleinheit (4) ermittelte Stellanforderung (R:[S1, S2,...]) für die Ansteuerung des Zusatzaktuators (14; 16; 18) handelt, wobei mittels der Managementeinrichtung (12) eine Ansteuerung des Zusatzaktuators (14; 16; 18) nach Maßgabe der Stellanforderung (R:[S1, S2,...]) vornehmbar ist.

12. Vorrichtung nach Anspruch 11,
**dadurch gekennzeichnet,**
**dass** die von der ersten Regeleinheit (4) ermittelte erste Giermomentanforderung (R:D_GM) innerhalb des elektronischen Bremssystems (2) an die Momentverteileinrichtung (20) übermittelbar ist.

13. Vorrichtung nach Anspruch 11,
**dadurch gekenntzeichnet,**
dass die von der ersten Regeleinheit (4) ermittelte erste Giermomentanforderung (R:D_GM) über die Managementeinrichtung (12) an die Momentverteileinrichtung (20) übermittelbar ist.

14. Vorrichtung nach einem der vorangegangenen Ansprüche,
**dadurch gekennzeichnet,**
**dass** es sich bei dem Zusatzaktuator um ein Stellglied (14) handelt, mit dem ein Zusatzlenkwinkel an durch den Fahrer lenkbaren Vorderrädern des Fahrzeugs einstellbar ist.

15. Vorrichtung nach einem der vorangegangenen Ansprüche,
**dadurch gekennzeichnet,**
**dass** es sich bei dem Zusatzaktuator um ein Stellglied (18) handelt, mit dem ein Lenkwinkel an Hinterrädern des Fahrzeugs einstellbar ist.

16. Vorrichtung nach einem der vorangegangenen Ansprüche,
**dadurch gekennzeichnet,**
**dass** es sich bei dem Zusatzaktuator um ein Stellglied (16) handelt, mit dem ein Fahrwerk des Fahrzeugs beeinflussbar ist.

17. Vorrichtung nach Anspruch 16,
**dadurch gekennzeichnet,**
**dass** es sich bei dem Stellglied (16) um wenigstens einen Verstelldämpfer handelt.

18. Vorrichtung nach Anspruch 16,
**dadurch gekennzeichnet,**
**dass** es sich bei dem Stellglied (16) um einen verstellbaren Stabilisator an einer Achse des Fahrzeugs handelt.

19. Verfahren zum Beeinflussen der Fahrdynamik eines Fahrzeugs, bei dem mittels eines elektronischen Bremssystems ein Bremsmoment an wenigstens einer Radbremse des Fahrzeugs eingestellt wird, wobei das Bremsmoment nach Maßgabe einer Giermomentanforderung ermittelt wird, und bei dem eine in dem elektronischen Bremssystem enthaltene erste Regeleinheit bei Vorliegen eines kritischen Fahrzustandes aktiviert wird und aufgrund einer Fahrdynamikregelung eine erste Giermomentanforderung ermittelt, wobei eine in einer Managementeinrichtung (12) enthaltene zweite Regeleinheit bei Vorliegen eines unterkritischen Fahrzustandes aktiviert wird, wobei die zweite Regeleinheit aufgrund einer Fahrdynamikregelung eine zweite Giermomentanforderung (R:D_GM) ermittelt, welche an die Momentverteileinrichtung (20) übermittelt wird, und dass in einem aktivierten Zustand der ersten Regeleinheit (4) ein Signal von dem elektronischen Bremssystem (2) an die Managementeinrichtung (12) übermittelt wird, das zu einer Deaktivierung der zweiten Regeleinheit führt
**dadurch gekennzeichnet,**
**dass** die zweite Regeleinheit aktivierbar ist, wenn ein Wert wenigstens einer einen Stabilitätsgrad des Fahrzustandes repräsentierenden Fahrzustandsgröße betraglich größer als ein erster Schwellenwert ist, und die erste Regeleinheit (4) aktivierbar ist, wenn der Wert der den Stabilitätsgrad des Fahrzustandes repräsentierenden Fahrzustandsgröße betraglich größer als ein zweiter Schwellenwert ist, wobei der zweite Schwellenwert größer ist als der erste Schwellenwert.

## Claims

1. Apparatus for influencing the driving dynamics of a vehicle with an electronic braking system (2) comprising a brake actuator, with which a braking torque on at least one wheel brake of the vehicle can be varied, wherein the braking torque can be determined in a torque distributor (20) according to a yaw torque demand, and a first control unit (4), which can be activated if a critical vehicle state exists, wherein a first yaw torque demand can be determined by the first control unit (4) based on a vehicle dynamic control, and a management device (12), which comprises a second control unit, which can be activated if a sub-critical vehicle state exists, whereby a second yaw torque demand (R:D_GM) can be determined by means of the second control unit based on the vehicle dynamic control, and wherein in an activated state of the first control unit (4), a signal (I:EBS_Status; R:D_GM: R:[S1, S2,...]) can be transmitted from the electronic braking system (2) to the management device (12), which leads to deactivation of the second control unit, **characterised in that**, the first control unit (4) has a signalling connection to a yaw torque arbitration device (10), which forms an interface between the electronic braking system (2) and the management device (12), and which enables control of the braking actuator by the management device (12), so that the second yaw torque demand (R:D_GM) can be transmitted to the torque distributor (20).

2. Apparatus according to Claim 1,
**characterized in that**,
the second control unit can be activated if a value of at least one vehicle state variable representing a degree of stability of the driving state is greater in value than a first threshold value.

3. Apparatus according to Claim 1 or 2,
**characterized in that**,
the first control unit (4) can be activated if the value of the vehicle state variable representing the degree of stability of the driving state is greater in value than a second threshold value, wherein the second threshold value is larger than the first threshold value.

4. Apparatus according to any one of the preceding Claims,
**characterized in that**,
an item of status information (I:CM_Status), which gives the activity status of the second control unit, can be transmitted from the management device (12) to the electronic braking system (2),
and **in that** the second threshold value can be varied depending on the activity status of the second control unit.

5. Apparatus according to Claim 4,
**characterized in that**,
the second threshold value can be increased if it can be determined within the electronic braking system (2), using the status information (I:CM_Status), that the second control unit is active.

6. Apparatus according to any one of the preceding Claims,
**characterized in that**,
a position demand (R: D_LW; R:S) for the control of at least one auxiliary actuator (14; 16; 18) for influencing the driving dynamics of the vehicle can be determined in the management device (12).

7. Apparatus according to Claim 6,
**characterized in that**,
the auxiliary actuator (14; 16; 18) can be controlled by means of the management device (12) according to the position demand.

8. Apparatus according to any one of the preceding Claims,
**characterized in that**,
a signal that is transmitted from the electronic braking system (2) to the management device (12) is an activity signal (I:EBS_Status), which indicates an activity of the first control unit (4), and **in that** a neutral behaviour of the auxiliary actuator (14; 16; 18) can be varied using the management device (12) on the basis of a reception of the activity signal (I:EBS_Status).

9. Apparatus according to any one of the preceding Claims,
**characterized in that**,
the first yaw torque demand (R:D_GM) can be transmitted to the torque distributor (20).

10. Apparatus according to any one of the preceding Claims,
**characterized in that**,
the signal transmitted from the electronic braking system (2) to the management device (12) is the first yaw torque demand (R:D_GM), and **in that** a position demand (R:D_LW; R:S) for the control of the auxiliary actuator (14; 16; 18) and/or a further yaw torque demand (R:D_GM) can be determined from the first yaw torque demand (R:D_GM), wherein the further yaw torque demand (R:D_GM) can be transmitted to the torque distributor (20).

11. Apparatus according to any one of the preceding Claims,
**characterized in that**,
the signal transmitted from the electronic braking system (2) to the management device (12) is a position demand (R:[S1, S2,..]) for the control of the auxiliary actuator (14; 16; 18), which is determined in the first control unit (4) and which is additional to the first yaw torque demand (R:D_GM), wherein a control of the auxiliary actuator (14; 16; 18) can be carried out by means of the management device (12) according to the position demand (R:[S1, S2,...]).

12. Apparatus according to Claim 11,
**characterized in that**,
the first yaw torque demand (R:D_GM) determined by the first control unit (4) can be transmitted within the electronic braking system (2) to the torque distributor (20).

13. Apparatus according to Claim 11,
**characterized in that**,
the first yaw torque demand (R:D_GM) determined by the first control unit (4) can be transmitted via the management device (12) to the torque distributor (20).

14. Apparatus according to any one of the preceding Claims,
**characterized in that**,
the auxiliary actuator is a control element (14), with which an auxiliary steering angle can be varied at front wheels of the vehicle, which front wheels can be steered by the driver.

15. Apparatus according to any one of the preceding Claims,
**characterized in that**,
the auxiliary actuator is a control element (18), with which a steering angle at rear wheels of the vehicle can be varied.

16. Apparatus according to any one of the preceding Claims,
**characterized in that**,
the auxiliary actuator is a control element (16), with which a chassis of the vehicle can be influenced.

17. Apparatus according to Claim 16,
**characterized in that**,
the control element (16) is at least one variable damper.

18. Apparatus according to Claim 16,
**characterized in that**,
the control element (16) is a variable stabilizer on an axle of the vehicle.

19. Method of influencing the driving dynamics of a vehicle, wherein a braking torque on at least one wheel brake of the vehicle can be varied by means of an electronic braking system, wherein the braking torque is determined according to a yaw torque demand, and wherein a first control unit within the electronic braking system is activated if a critical driving state exists and determines a first yaw torque demand on the basis of a driving dynamics control, wherein a second control unit within a management device (12) is activated if a sub-critical driving state exists, wherein the second control unit determines a second yaw torque demand (R:D_GM) on the basis of a driving dynamics control, which is transmitted to the torque distributor (20), and wherein a signal is transmitted from the electronic braking system (2) to the management device (12) in an activated state of the first control unit (4), which leads to a deactivation of the second control unit, **characterized in that**,
the second control unit can be activated if a value of at least one vehicle state variable representing a degree of stability of the vehicle state is greater in value than a first threshold,
and the first control unit (4) can be activated if the value of the vehicle state variable representing the degree of stability of the vehicle state is greater in value than a second threshold value, wherein the second threshold value is greater than the first threshold value.

## Revendications

1. Dispositif pour influencer la dynamique de conduite d'un véhicule équipé d'un système de freinage électronique (2) comprenant un actionneur de frein avec lequel peut être réglé le moment de freinage sur au moins un frein de roue du véhicule, le moment de freinage pouvant être déterminé dans un dispositif de distribution du moment (20) conformément à une exigence de couple de lacet, et une première unité de régulation (4) qui peut être activée en présence d'une situation de conduite critique, une première exigence de couple de lacet pouvant être déterminée au moyen de la première unité de régulation (4) sur la base d'une régulation de la dynamique de conduite, et un dispositif de gestion (12) qui contient une deuxième unité de régulation qui peut être activée en présence d'une situation de conduite non critique, une deuxième exigence de couple de lacet (R:D_GM) pouvant être déterminée au moyen de la deuxième unité de régulation sur la base d'une régulation de la dynamique de conduite et, dans un état activé de la première unité de régulation (4), un signal (I:EBS_Status ; R:D_GM ; R:[S1, S2, ...]) pouvant être communiqué du système de freinage électronique (2) au dispositif de gestion (12), lequel donne lieu à une désactivation de la deuxième unité de régulation, **caractérisé en ce que** la première unité de régulation (4) est reliée par signaux avec un dispositif d'arbitrage du couple de lacet (10), lequel représente une interface entre le système de freinage électronique (2) et le dispositif de gestion (12), et permet une commande de l'actionneur de frein par le dispositif de gestion (12) de telle sorte que la deuxième exigence de couple de lacet (R:D_GM) peut être communiquée au dispositif de distribution du moment (20).

2. Dispositif selon la revendication 1, **caractérisé en ce que** la deuxième unité de régulation peut être activée lorsqu'une valeur d'au moins une grandeur de situation de conduite représentant un degré de stabilité de la situation de conduite est supérieure, par sa valeur absolue, à une première valeur de seuil.

3. Dispositif selon la revendication 1 ou 2, **caractérisé en ce que** la première unité de régulation (4) peut être activée lorsque la valeur de la grandeur de situation de conduite représentant le degré de stabilité de la situation de conduite est supérieure, par sa valeur absolue, à une deuxième valeur de seuil, la deuxième valeur de seuil étant supérieure à la première valeur de seuil.

4. Dispositif selon l'une des revendications précédentes, **caractérisé en ce qu'**une information d'état (I:CM_Status), laquelle indique l'état d'activité de la deuxième unité de régulation, peut être communiquée du dispositif de gestion (12) au système de freinage électronique (2) et **en ce que** la deuxième valeur de seuil peut être modifiée en fonction de l'état d'activité de la deuxième unité de régulation.

5. Dispositif selon la revendication 4, **caractérisé en ce que** la deuxième valeur de seuil peut être augmentée lorsqu'il est constaté dans le système de freinage électronique (2), au moyen de l'information d'état (I:CM_Status), que la deuxième unité de régulation est active.

6. Dispositif selon l'une des revendications précédentes, **caractérisé en ce qu'**une exigence de positionnement (R:D_LW ; R:S) pour la commande d'au moins un actionneur supplémentaire (14 ; 16 ; 18) qui influence la dynamique de conduite du véhicule peut être déterminée dans le dispositif de gestion (12).

7. Dispositif selon la revendication 6, **caractérisé en ce que** l'actionneur supplémentaire (14 ; 16 ; 18) peut être commandé au moyen du dispositif de gestion (12) conformément à l'exigence de positionnement.

8. Dispositif selon l'une des revendications précédentes, **caractérisé en ce que** le signal communiqué par le système de freinage électronique (2) au dispositif de gestion (12) est un signal d'activité (I:EBS_Status) qui indique une activité de la première unité de régulation (4), et **en ce qu'**un comportement neutre de l'actionneur supplémentaire (14 ; 16 ; 18) peut être réglé au moyen du dispositif de gestion (12) sur la base d'une réception du signal d'activité (I:EBS_Status).

9. Dispositif selon l'une des revendications précédentes, **caractérisé en ce que** la première exigence de couple de lacet (R:D_GM) peut être communiquée au dispositif de distribution du moment (20).

10. Dispositif selon l'une des revendications précédentes, **caractérisé en ce que** le signal communiqué par le système de freinage électronique (2) au dispositif de gestion (12) est la première exigence de couple de lacet (R:D_GM), et **en ce qu'**une exigence de positionnement (R:D_LW; R:S) pour la commande de l'actionneur supplémentaire (14 ; 16 ; 18) et/ou une exigence de couple de lacet (R:D_GM) supplémentaire peut être déterminée à partir de la première exigence de couple de lacet (R:D_GM) au moyen du dispositif de gestion (12), l'exigence de couple de lacet (R:D_GM) supplémentaire pouvant être communiquée au dispositif de distribution du moment (20).

11. Dispositif selon l'une des revendications précédentes, **caractérisé en ce que** le signal communiqué par le système de freinage électronique (2) au dispositif de gestion (12) est une exigence de positionnement (R:[S1, S2, ...]) pour la commande de l'actionneur supplémentaire (14 ; 16 ; 18) déterminée dans la première unité de régulation (4) en plus de la première exigence de couple de lacet (R:D_GM), une commande de l'actionneur supplémentaire (14 ; 16 ; 18) conformément à l'exigence de positionnement (R:[S1, S2, ...]) pouvant être effectuée au moyen du dispositif de gestion (12).

12. Dispositif selon la revendication 11, **caractérisé en ce que** la première exigence de couple de lacet (R:D_GM) déterminée par la première unité de régulation (4) peut être communiquée à l'intérieur du système de freinage électronique (2) au dispositif de distribution du moment (20).

13. Dispositif selon la revendication 11, **caractérisé en ce que** la première exigence de couple de lacet (R:D_GM) déterminée par la première unité de régulation (4) peut être communiquée au dispositif de distribution du moment (20) par le biais du dispositif de gestion (12).

14. Dispositif selon l'une des revendications précédentes, **caractérisé en ce que** l'actionneur supplémentaire est un élément de commande (14) qui permet de régler un angle de direction supplémentaire sur les roues avant du véhicule orientables par le conducteur.

15. Dispositif selon l'une des revendications précédentes, **caractérisé en ce que** l'actionneur supplémentaire est un élément de commande (18) qui permet de régler un angle de direction sur les roues arrière du véhicule.

16. Dispositif selon l'une des revendications précédentes, **caractérisé en ce que** l'actionneur supplémentaire est un élément de commande (16) qui permet d'influencer un mécanisme de roulement du véhicule.

17. Dispositif selon la revendication 16, **caractérisé en ce que** l'élément de commande (16) est au moins un amortisseur de positionnement.

18. Dispositif selon la revendication 16, **caractérisé en ce que** l'élément de commande (16) est un stabilisateur positionnable sur un essieu du véhicule.

19. Procédé pour influencer la dynamique de conduite d'un véhicule, selon lequel un moment de freinage sur au moins un frein de roue du véhicule est réglé au moyen d'un système de freinage électronique, le moment de freinage étant déterminé conformément à une exigence de couple de lacet, et selon lequel une première unité de régulation qui est incluse dans le système de freinage électronique est activée en présence d'une situation de conduite critique et détermine une première exigence de couple de lacet sur la base d'une régulation de la dynamique de conduite, une deuxième unité de régulation qui est incluse dans un système de gestion (12) étant activée en présence d'une situation de conduite non critique, la deuxième unité de régulation déterminant une deuxième exigence de couple de lacet (R:D_GM) sur la base d'une régulation de la dynamique de conduite, laquelle est communiquée au dispositif de distribution du moment (20), et dans un état activé de la première unité de régulation (4), un signal étant communiqué du système de freinage électronique (2) au dispositif de gestion (12), lequel donne lieu à une désactivation de la deuxième unité de régulation, **caractérisé en ce que** la deuxième unité de régulation peut être activée lorsqu'une valeur d'au moins une grandeur de situation de conduite représentant un degré de stabilité de la situation de conduite est supérieure, par sa valeur absolue, à une première valeur de seuil, et la première unité de régulation (4) peut être activée lorsque la valeur de la grandeur de situation de conduite représentant le degré de stabilité de la situation de conduite est supérieure, par sa valeur absolue, à une deuxième valeur de seuil, la deuxième valeur de seuil étant supérieure à la première valeur de seuil.
